# FASCICULE DE BREVET EUROPEEN

(11) **EP 0 469 503 B1**
(45) Date de publication et mention de la délivrance du brevet: **16.08.1995**
(21) Numéro de dépôt: 91112693.6
(22) Date de dépôt: 29.07.1991
(51) Int. Cl.: A45C 11/18, G06K 19/07, G06K 7/06

(54) **Dispositif de logement d'une carte à mémoire**
Aufnahmevorrichtung für eine Speicherkarte
Apparatus for the receipt of memory card

(30) Priorité: 03.08.1990 FR 9009980
(43) Date de publication de la demande: 05.02.1992
(73) Titulaire: ALCATEL MOBILE COMMUNICATION FRANCE, 75008 Paris (FR)
(72) Inventeur: Ozouf, René, F-93350 Le Bourget (FR); Seguin, Jean-Michel, F-92600 Asnieres sur Seine (FR)
(74) Mandataire: Weinmiller, Jürgen

(56) Documents cités:
- EP-A- 0 367 325
- WO-A-90/04239
- DE-A- 3 642 424
- GB-A- 2 116 480
- US-A- 4 630 769
- PATENT ABSTRACTS OF JAPAN vol. 10, no. 162 (P-466)(2218), 10 juin 1986; & JP - A - 61015289 (MITSUBISHI JUSHI KK) 23.01.1986
- idem
- PATENT ABSTRACTS OF JAPAN vol. 10, no. 22 (P-424)(2079), 28 janvier 1986; & JP - A - 60173789 (NIPPON DENSHIN DENWAKOSHA) 07.09.1985

## Description

La présente invention concerne le domaine des cartes à mémoire.

Actuellement, de nombreux dispositifs fonctionnent avec des cartes à mémoire ou sont prévus pour fonctionner avec de telles cartes. Ces cartes sont constituées par un rectangle en matière plastique supportant un circuit intégré plus où moins complexe mais composé au minimum d'une mémoire et d'une logique. Les dimensions du rectangle de plastique sont normalisées (longueur : 85,6 mm, largeur : 53,98 mm, épaisseur : 0,76 mm). Les dimensions du circuit intégré avec ses contacts sont beaucoup plus petites que les dimensions du rectangle.

Les cartes à mémoire ont été jusqu'à présent utilisées en association avec des appareils relativement volumineux par rapport à leur taille (par exemple les télécartes utilisées dans les téléphones publics). La taille des cartes normalisées ne pose pas de problème avec ce type d'appareil. Elle est en outre particulièrement bien adaptée à sa manipulation par l'utilisateur et son rangement dans une poche ou un portefeuille est aisé.

Par ailleurs, dans le domaine de la téléphonie, il est apparu un nouveau produit constitué par les radiotéléphones portables. Ces appareils, relativement volumineux à l'origine, se présentent maintenant sous des dimensions beaucoup plus réduites. Parallèlement et pour diverses raisons (contrôle d'accès, tarification), on a pensé à les faire fonctionner en association avec une carte à mémoire qui doit pouvoir être introduite et retirée de l'appareil avec facilité.

A titre d'exemple, la demande de brevet internationale W0-90/04239 décrit un dispositif pour transmettre à distance des informations d'identification mémorisées dans un microcircuit implanté dans une carte à mémoire de dimension standard. Un compartiment émetteur-récepteur de taille trés réduite reçoit la carte à mémoire, et comprend des moyens électroniques pour lire des informations mémorisées dans la carte à mémoire et des moyens pour émettre ces informations à destination d'un terminal distant.

La miniaturisation des radiotéléphones portables est maintenant arrivée à un stade tel que la carte à mémoire classique a des dimensions trop importantes pour l'appareil surtout si on tient compte du fait qu'il doit comporter un dispositif de logement de la carte assurant un fonctionnement normal.

Le circuit intégré avec ses contacts occupant une surface restreinte, la réduction des dimensions de la carte ne pose en soi aucun problème. Ainsi, la réduction des dimensions des cartes à mémoires permet leur usage et leur intégration au sein de produits de dimensions réduites tout en assurant leur protection vis-à-vis de l'environnement extérieur. Une carte à mémoire de taille réduite induit cependant des difficultés quant à la possibilité de l'extraire du produit auquel elle est assignée. De plus, la carte doit pouvoir être manipulée et transportée lorsqu'elle est extraite du produit qui la reçoit. Son extraction ainsi que son insertion ne doivent pas réduire sa capacité de fonctionnement, le positionnement de la carte devant être univoque.

Lorsque la carte est retirée de l'appareil d'utilisation, elle doit en outre être protégée des actions liées à l'environnement. Sa taille réduite ne doit pas favoriser sa perte.

L'invention vise à pallier ces inconvénients. Elle consiste en un dispositif de logement d'une carte à mémoire pouvant prendre la forme d'une partie fixe quand elle est associée au produit d'utilisation et permettant la lecture et l'écriture d'informations diverses. Le dispositif de logement peut aussi prendre la forme d'une partie mobile recevant la carte à mémoire et permettant son maintien, son positionnement, son extraction, son transport et sa protection de manière intégrée.

L'invention a donc pour objet un dispositif de logement d'une carte à mémoire, comportant un compartiment de réception de la carte à mémoire et un support indépendant dudit compartiment, la carte étant fixée sur ledit support, le dispositif comprenant des moyens permettant la fixation temporaire du support sur le compartiment de réception.

Le compartiment de réception est constitué, en cas d'usage de la carte, par une partie d'un appareil comprenant au moins un circuit électronique destiné à fonctionner en relation avec la carte à mémoire, le compartiment comprenant des moyens de connexion électrique entre les contacts de la carte à mémoire et le circuit électronique.

Le compartiment de réception est constitué par un fourreau en cas de rangement de la carte à mémoire.

Le support peut être constitué par une pièce plate sur laquelle est fixée la carte à mémoire selon l'une de ses faces principales.

Il peut aussi, selon une autre variante, être constitué par une pièce solidaire de la carte à mémoire par l'une des extrémités de la carte.

L'invention sera mieux comprise et d'autres avantages apparaîtront à la lecture de la description qui va suivre, donnée à titre non limitatif, accompagnée des dessins annexés parmi lesquels :
- la figure 1 représente, vu en coupe et selon une première variante de réalisation, un dispositif de logement d'une carte à mémoire pour un usage effectif de la carte,
- la figure 2 représente vu en coupe le dispositif de logement de la figure 1 en position fermée,
- la figure 3 représente, vu en coupe et selon la première variante de réalisation, un dispositif de logement d'une carte à mémoire pour le rangement de la carte,
- la figure 4 représente, vu en coupe et selon une deuxième variante de réalisation, un dispositif de logement d'une carte à mémoire pour une utilisation de cette carte,
- les figures 5 et 6 représentent, vus en coupe et selon la deuxième variante de réalisation, des dispositifs de logement d'une carte à mémoire pour le rangement de la carte,
- la figure 7 représente, en vue éclatée, un support à fente et à carte à mémoire pivotante.

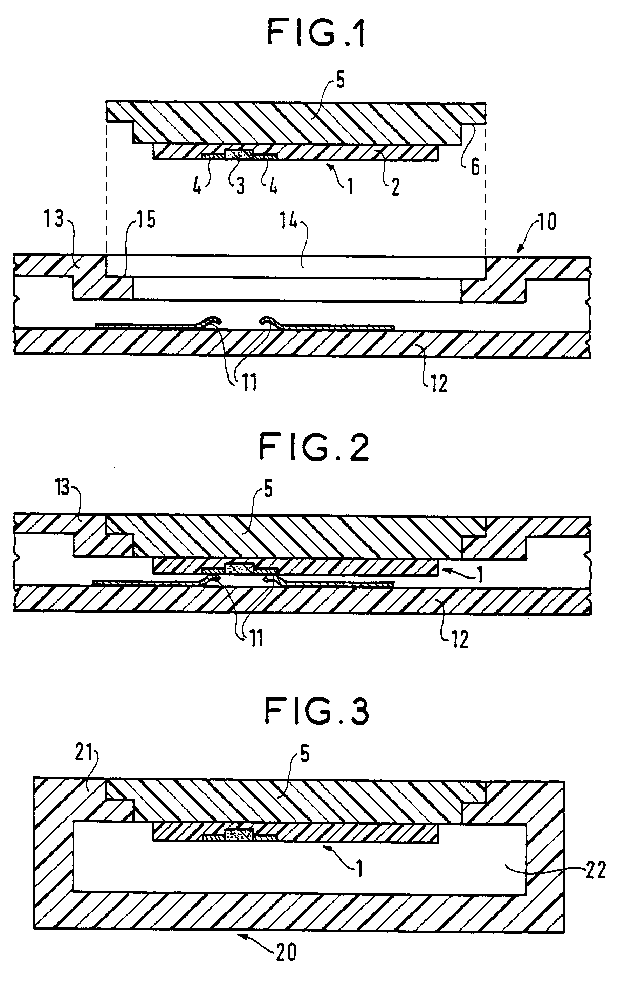

Selon la figure 1, la carte à mémoire 1 est constituée par un rectangle de plastique 2 supportant un circuit intégré 3 et des contacts 4 dont seulement deux ont été représentés. Le rectangle de plastique est de dimensions réduites, par exemple 25 mm x 15 mm. Il est fixé sur un support 5 par exemple par collage. Pour un usage effectif de la carte, le compartiment de réception 10 constitue une partie d'un appareil comportant un ou plusieurs circuits électroniques. Cet appareil peut être un radiotéléphone portable. Le compartiment de réception 10 comprend des contacts mobiles 11 disposés sur le fond 12 du compartiment. La face avant 13 du compartiment comporte une ouverture 14 pour permettre l'introduction de la carte à mémoire 1. La face avant 13 comporte également, à la périphérie de l'ouverture 14, un rebord interne 15 de forme correspondant au dégagement 6 pratiqué à la périphérie du support 5.

Lorsque la carte à mémoire et son support sont disposés sur le compartiment de réception comme l'illustre la figure 2, les contacts 4 du circuit intégré 3 sont en liaison électrique avec les contacts mobiles 11 du compartiment de réception.

Le support 5 ainsi que le compartiment de réception 10 peuvent ête réalisés en matière plastique. Ces éléments peuvent être conçu, sans problème pour que leurs dimensions respectives assurent un montage sans jeu.

Il est avantageux de prévoir un détrompeur pour éviter un montage incorrect.

Sur la figure 3, on a représenté la carte à mémoire en position de rangement. Le dispositif de logement est constitué par un fourreau 20 dont la face avant 21 est similaire à celle du compartiment de réception 10. Le fourreau 20 peut également être réalisé en matière plastique. La mise en place du support 5 sur la face avant du fourreau 20 assure l'isolement de l'espace intérieur 22 du fourreau. La carte à mémoire est alors protégée de l'environnement extérieur.

La configuration du support permet sa mise en place, son positionnement et son maintien au sein de l'appareil. Il assure de fait le positionnement relatif du circuit intégré (plus communément appelé puce) à la carte vis-à-vis des contacts solidaires de l'appareil. Le support de la carte assure la protection de la carte à mémoire contre l'environnement extérieur.

Jusqu'à présent la carte à mémoire et son support ont été décrits comme deux éléments différents et rendus solidaires. Ceci est dû aux méthodes et aux habitudes de fabrication actuelles. On pourrait très bien concevoir un produit unique jouant le rôle de support et sur lequel le circuit intégré serait directement élaboré.

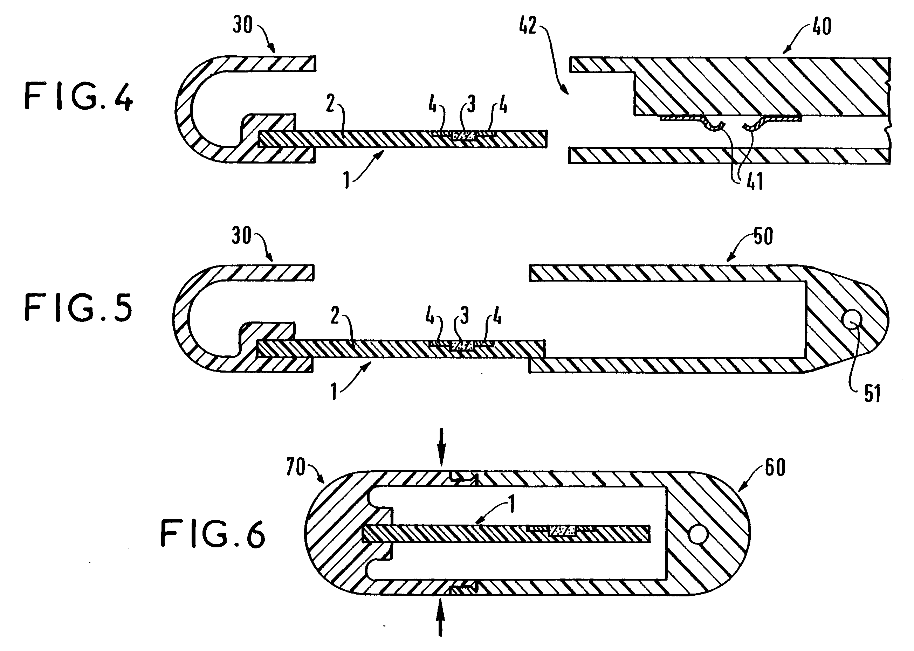

Dans la variante de réalisation représentée à la figure 4, le support est constitué par une pièce 30 solidaire de la carte à mémoire 1 par l'une de ses extrémités. Le compartiment de réception 40 équipé de ses contacts mobiles 41 reçoit la carte à mémoire selon une face d'entrée 42. Comme pour la première variante, l'introduction de la carte provoque la liaison électrique entre les contacts 4 du circuit intégré 3 et les contacts mobiles correspondants 41. Lorsque la mise en place est effectuée, la face d'entrée 42 du compartiement est obturée par le support 30. La carte 2 peut être fixée à son support par collage ou pincement. Là encore un détrompeur peut être prévu pour éviter les erreurs de mise en place.

Sur la figure 5 on a représenté la carte à mémoire et son support selon la deuxième variante associée à un compartiment de réception prévu pour le rangement de la carte. Le dispositif de logement comprend dans ce cas un fourreau 50 conçu de façon assez similaire au compartiment de réception 40. Le fourreau peut comporter un élément permettant de le relier à autre chose pour éviter sa perte. Sur la figure 5, la masse du fourreau 50 comporte un trou 51 dans lequel peut passer un anneau. Ainsi le fourreau peut, équipé ou non de la carte à mémoire, servir de porte-clefs.

La fixation temporaire du support sur le compartiment de réception peut se faire de différentes façons. Un système à pinces ou à clips présente l'avantage d'assurer des assemblages et des séparations rapides.

Dans le cas de la première variante de réalisation, la fixation temporaire peut être obtenue de la même manière que pour les jouets d'enfants à piles pour lesquels le logement des piles comporte un couvercle amovible.

Dans le cas de la deuxième variante de réalisation, on peut utiliser un système à clips comme celui représenté à la figure 6 sur le support 70 et le fourreau 60. Les clips sont par exemple disposés sur deux faces opposées du fourreau. Le dégagement du support 70 s'effectue en pressant ces faces dans le sens des flèches et en écartant le fourreau et le support. L'assemblage se fait en pressant les mêmes faces dans le sens des flèches et en rapprochant les deux pièces.

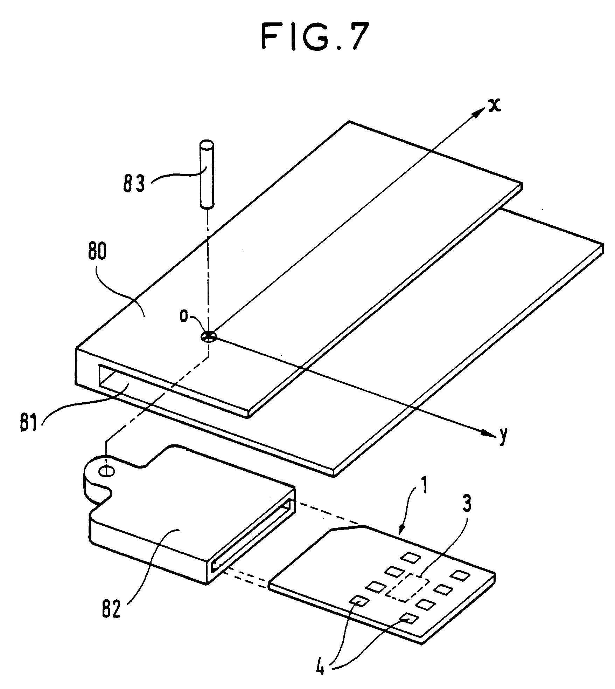

Le compartiment de réception de la carte à mémoire pour son rangement peut être constitué par une fente pratiquée dans le support de la carte. Celle-ci, par pivotement autour d'un axe, peut alors être rentrée dans la fente pour son rangement ou sortie de la fente en vue de son utilisation. La figure 7 est une vue éclatée d'une telle réalisation. Le support 80 a une section en forme de U dont l'une des branches est plus courte que l'autre. L'espace entre les branches constitue une fente 81 servant de compartiment de réception à la carte 1. La carte est maintenue par l'une de ses extrémités dans l'étui 82 qui peut pivoter autour de l'axe 83. En position carte rentrée, l'étui 82 et la carte 1 sont disposés dans la direction Ox, l'un des bords latéraux de l'étui, éventuellement pourvu d'un onglet, dépassant de la fente pour pouvoir le faire pivoter. En position carte sortie, en vue d'une utilisation, l'étui et la carte sont disposés dans la direction Oy, un arrêtoir non représenté limitant l'angle d'ouverture à l'axe Oy.

## Revendications

1. Dispositif de logement d'une carte à mémoire comprenant un compartiment (10, 40 ; 20, 50, 60) pour recevoir ladite carte à mémoire (1), caractérisé en ce qu'il comprend, en outre,
un support (5, 30, 70) indépendant dudit compartiment, ladite carte (1) étant fixée sur ledit support, et
des moyens pour fixer temporairement ledit support (5, 30, 70) sur ledit compartiment (10, 40 ; 20, 50, 60) afin de loger ladite carte dans ledit compartiment.

2. Dispositif conforme à la revendication 1, caractérisé en ce que ledit compartiment (10, 40) constitue une partie d'un appareil comprenant au moins un circuit électronique destiné à fonctionner en relation avec la carte à mémoire (1), ledit compartiment (10, 40) comprenant des moyens (11, 41) pour connecter électriquement des contacts (4) de ladite carte et ledit circuit électronique.

3. Dispositif conforme à la revendication 2, caractérisé en ce que lesdits moyens pour connecter électriquement (11, 41) sont sous la forme de contacts mobiles.

4. Dispositif conforme à la revendication 1, caractérisé en ce que ledit compartiment (20, 50, 60) est un fourreau de rangement de la carte à mémoire.

5. Dispositif selon l'une quelconque des revendications 1 à 4, caractérisé en ce que ledit support (5, 30, 70) est constitué par une pièce plate sur l'une des faces principales de laquelle est fixée la carte à mémoire (1).

6. Dispositif de logement selon l'une quelconque des revendications 1 à 4, caractérisé en ce que ledit support (5, 30, 70) est constitué par une pièce à laquelle la carte (1) est fixée grâce à l'une de ses extrémités.

7. Dispositif conforme à l'une quelconque des revendications précédentes, caractérisé en ce que lesdits moyens pour fixer sont formés en partie dans ledit support (5, 30, 70) et en partie dans ledit compartiment (10, 40, 20, 50, 60) de telle sorte qu'un assemblage desdits support et compartiment grâce auxdits moyens pour fixer permettent une fixation temporaire desdits support et compartiment entre eux.

8. Dispositif conforme à la revendication 7, caractérisé en ce que lesdits moyens pour fixer sont sous la forme de clips.

9. Dispositif conforme à l'une quelconque des revendications 1 à 6, caractérisé en ce que ladite carte (1) est fixée au support, en rotation, autour d'un axe (83), le support (80) possédant une fente de rangement (81) formant ledit compartiment, et dans laquelle fente ladite carte est introduite par pivotement autour dudit axe (83).

## Claims

1. Device for accommodating a smart card comprising a compartment (10, 40; 20, 50, 60) for receiving said smart card (1), characterised in that it further comprises a support (5, 30, 70) independent of said compartment, said card (1) being fixed to said support, and means for fixing said support (5, 30, 70) temporarily to said compartment (10, 40; 20, 50, 60) in order to accommodate said card in said compartment.

2. Device according to claim 1 characterised in that said compartment (10, 40) constitutes a part of a device including at least one electronic circuit adapted to operate in conjunction with the smart card (1), said compartment (10, 40) comprising means (11, 41) for electrically connecting contacts (4) of said card and said electronic circuit.

3. Device according to claim 2 characterised in that said electrical connection means (11, 41) are in the form of mobile contacts.

4. Device according to claim 1 characterised in that said compartment (20, 50, 60) is a case for storing the smart card.

5. Device according to any one of claims 1 to 4 characterised in that said support (5, 30, 70) is a flat member to one larger side of which the smart card (1) is fixed.

6. Accommodation device according to any one of claims 1 to 4 characterised in that said support (5, 30, 70) is a member to which the smart card (1) is fixed at one end.

7. Device according to any one of the preceding claims characterised in that said fixing means are formed in part in said support (5, 30, 70) and in part in said compartment (10, 40, 20, 50, 60) so that mutual attachment of said support and said compartment by said fixing means enables temporary fixing together of said support and said compartment.

8. Device according to claim 7 characterised in that said fixing means are in the form of clips.

9. Device according to any one of claims 1 to 6 characterised in that said card (1) is fixed to the support to rotate about a pin (83), the support (80) having a storage slot (81) forming said compartment and in which said card is inserted by pivoting about said pin (83).

## Patentansprüche

1. Vorrichtung zur Aufnahme einer Speicherkarte in einem Abteil (10, 40; 20, 50, 60), das die Speicherkarte (1) aufnehmen kann, dadurch gekennzeichnet, daß sie außerdem einen vom Abteil unabhängigen Träger (5, 30, 70), auf dem die Karte (1) befestigt ist,
und Mittel zur vorübergehenden Befestigung des Trägers (5, 30, 70) auf dem Abteil (10, 40; 20, 50, 60) besitzt, um die Karte in dem Abteil unterzubringen.

2. Vorrichtung nach Anspruch 1, dadurch gekennzeichnet, daß das Abteil (10, 40) einen Teil eines Geräts bildet, das mindestens eine in Verbindung mit der Speicherkarte (1) betriebsfähige elektronische Schaltung enthält, und daß das Abteil (10, 40) Mittel (11, 41) enthält, um Kontakte (4) der Karte elektrisch mit der elektronischen Schaltung zu verbinden.

3. Vorrichtung nach Anspruch 2, dadurch gekennzeichnet, daß die Mittel zum elektrischen Anschluß (11, 41) als bewegliche Kontakte ausgebildet sind.

4. Vorrichtung nach Anspruch 1, dadurch gekennzeichnet, daß das Abteil (20, 50, 60) ein Futteral zur Aufbewahrung der Speicherkarte ist.

5. Vorrichtung nach einem beliebigen der Ansprüche 1 bis 4, dadurch gekennzeichnet, daß der Träger (5, 30, 70) aus einem flachen Bauteil besteht, auf dessen einer Hauptseite die Speicherkarte (1) befestigt ist.

6. Vorrichtung nach einem beliebigen der Ansprüche 1 bis 4, dadurch gekennzeichnet, daß der Träger (5, 30, 70) aus einem Bauteil besteht, an dem die Karte (1) über eines ihrer Enden befestigt ist.

7. Vorrichtung nach einem beliebigen der vorhergehenden Ansprüche, dadurch gekennzeichnet, daß die Befestigungsmittel teils am Träger (5, 30, 70) und teils im Abteil (10, 40, 20, 50, 60) ausgebildet sind, so daß ein Zusammenstecken des Trägers und des Abteils über die Befestigungsmittel eine vorübergehende gegenseitige Befestigung des Trägers und des Abteils erlaubt.

8. Vorrichtung nach Anspruch 7, dadurch gekennzeichnet, daß die Befestigungsmittel die Form von Clips aufweisen.

9. Vorrichtung nach einem beliebigen der Ansprüche 1 bis 6, dadurch gekennzeichnet, daß die Karte (1) drehbar um eine Achse (83) am Träger befestigt ist und daß der Träger (80) einen Aufbewahrungsschlitz (81) besitzt, der das Abteil bildet und in den die Karte durch Schwenken um die Achse (83) hineingeschoben werden kann.
